# EUROPÄISCHE PATENTSCHRIFT

(11) **EP 3 165 428 B1**
(45) Veröffentlichungstag und Bekanntmachung des Hinweises auf die Patenterteilung: **14.08.2019**
(21) Anmeldenummer: 16002218.2
(22) Anmeldetag: 14.10.2016
(51) Int. Cl.: B62D 27/02, B62D 29/04

(54) **KNOTENSTRUKTUR FÜR EINE FAHRZEUGKAROSSERIE, VERFAHREN ZU DEREN HERSTELLUNG UND FAHRZEUGKAROSSERIE MIT WENIGSTENS EINER KNOTENSTRUKTUR**
NODE STRUCTURE FOR A VEHICLE BODY, METHOD FOR ITS PREPARATION AND CAR BODY WITH AT LEAST ONE NODE STRUCTURE
STRUCTURE DE LIAISON POUR CARROSSERIE DE VÉHICULE, SON PROCÉDÉ DE FABRICATION ET CARROSSERIE DE VÉHICULE COMPRENANT AU MOINS UNE STRUCTURE DE LIAISON

(30) Priorität: 06.11.2015 DE 102015014360
(43) Veröffentlichungstag der Anmeldung: 10.05.2017
(73) Patentinhaber: AUDI AG, 85045 Ingolstadt (DE)
(72) Erfinder: Eidmann, Florian, DE - 74613 Öhringen (DE); Stoll, Oliver, DE - 69429 Waldbrunn (DE)
(74) Vertreter: Eickmeyer, Dietmar

(56) Entgegenhaltungen:
- WO-A1-2012/062391
- DE-A1- 10 022 360
- DE-A1-102005 061 474
- DE-A1-102011 107 212
- DE-A1-102012 112 313
- DE-A1-102013 220 209
- DE-C1- 4 423 642

## Beschreibung

Verfahren zur Herstellung einer Knotenstruktur, Knotenstruktur für eine Fahrzeugkarosse, die nach einem solchen Verfahren hergestellt ist und Fahrzeugkarosse mit wenigstens einer solchen Knotenstruktur.

Die Erfindung betrifft eine Knotenstruktur für eine Fahrzeugkarosserie, mit wenigstens zwei Profilbauteilen und einem aus faserverstärktem Kunststoff gebildeten Verbindungsknoten. Die Erfindung betrifft ferner ein Verfahren zur Herstellung einer solchen Knotenstruktur und eine Fahrzeugkarosserie mit wenigstens einer solchen Knotenstruktur.

Aus dem Stand der Technik sind Karosserieaufbauten für Kraftfahrzeuge, insbesondere Personenkraftwagen, bekannt, die aus einzelnen vorgefertigten Profilbauteilen gebildet sind, wobei die Profilbauteile an sogenannten Knotenstellen mittels Verbindungsknoten gefügt bzw. miteinander verbunden sind. Zum Stand der Technik wird bspw. auf die Patentschriften DE 102 56 608 A1, DE 10 2014 209 991 A1, WO 2012 06 23 91 A1 und DE 10 2007 027 593 A1 hingewiesen. Ferner werden für derartige Karosserieaufbauten auch aus Faserkunststoffverbund gebildete Profilbauteile verwendet, wodurch sich mitunter erhebliche Gewichtseinsparungen erzielen lassen. Zum diesbezüglichen Stand der Technik wird bspw. auf die Patentschriften DE 44 23 642 C1, DE 10 2013 226 607 A1 und DE 10 2013 220 209 A1 hingewiesen.

Der Erfindung liegt die Aufgabe zugrunde, eine verbesserte Knotenstruktur und ein Verfahren zu deren Herstellung anzugeben.

Diese Aufgabe wird gelöst durch ein der Erfindung gemäßes Verfahren mit den Merkmalen des Patentanspruchs 1 und durch eine der Erfindung gemäße Knotenstruktur durch den Patentanspruch 7 und durch die jeweils beigeordneten Unteransprüche.

Mit einem weiteren nebengeordneten Patentanspruch erstreckt sich die Erfindung auch auf eine Fahrzeugkarosserie, insbesondere für einen Personenkraftwagen, mit einem aus Profilbauteilen gebildeten Rahmen (bspw. Space-Frame-Rahmen) oder Rahmenabschnitt (bspw. eine Vorderwagen-, Mittelwagen- oder Hinterwagenstruktur), der wenigstens eine erfindungsgemäße und/oder mit einem erfindungsgemäßen Verfahren hergestellte Knotenstruktur aufweist. Bevorzugt weist der Rahmen oder Rahmenabschnitt nur Hohlprofilbauteile und insbesondere nur aus Faserkunststoffverbund bzw. Faserkunststoffverbundmaterial gebildete Hohlprofilbauteile auf.

Weiterbildungen und Ausgestaltungen der Erfindung ergeben sich analog für alle Erfindungsgegenstände aus den abhängigen Patentansprüchen, der nachfolgenden Beschreibung und den Figuren.

Die erfindungsgemäße Knotenstruktur für eine Fahrzeugkarosserie, hergestellt mit dem untenstehenden erfindungsgemässen Verfahren, umfasst wenigstens zwei Profilbauteile und einen aus faserverstärktem Kunststoff gebildeten Verbindungsknoten, der die Profilbauteile an ihren knotenseitigen Profilenden miteinander verbindet. Der Verbindungsknoten ist aus einem mit unorientierten Kurzfasern verstärkten Kunststoff gebildet und in wenigstens einem Bereich bzw. Abschnitt zusätzlich mit einem Einleger verstärkt.

Unter einem Profilbauteil wird insbesondere ein langgestrecktes, stangenartiges Bauteil mit einer definierten Querschnittsform (Profil) verstanden, das einen geraden oder auch gekrümmten bzw. gebogenen axialen Verlauf aufweisen kann. Die Querschnittsform bzw. das Profil kann sich über dem axialen Verlauf verändern. Insbesondere handelt es sich um vorgefertigte Profilbauteile.

Unter einem mit Kurzfasern verstärkten Kunststoff wird insbesondere eine duroplastische oder auch thermoplastische Kunststoffmasse (Matrix) verstanden, in der ohne vorgegebene Orientierung aus Kohlenstofffasern, Glasfasern, Kunstfasern, Mineralfasern, Metallfasern, Mischfasern, Recyclingfasern und/oder dergleichen gebildete Verstärkungsfasern eingebettet sind, die eine Länge von 1 mm bis 100 mm, bevorzugt von 2 mm bis 50 mm und insbesondere von 3 mm bis 25 mm aufweisen.

Ein der Verstärkung dienender und insbesondere unter Berücksichtigung von Lastpfaden bzw. Kräfteverläufen in der Kunststoffmasse eingebetteter Einleger kann aus jedem geeigneten Material, insbesondere Metall (bspw. Blech oder Gitter) oder Kunststoff oder Faserkunststoffverbund, gebildet sein. Bevorzugt ist der Einleger aus orientierten Fasern (Verstärkungsfasern) und/oder aus Langfasern gebildet (sogenanntes Patch). Bevorzugt weisen die Langfasern eine Länge auf, die deutlich (z. B. wenigstens 50 %) über der Länge der Kurzfasern (s. o) liegt (gegebenenfalls ist von einer mittleren Faserlänge auszugehen).

Der Einleger bzw. das Patch kann aus wenigstens einem Verstärkungsfasern, insbesondere Langfasern, enthaltenden textilen Fasermaterial bzw. Faserhalbzeug, bspw. einem UD-Gelege (mit planparallelen Fasern) oder einem Fasergewebe, hergestellt sein, wobei auch mehrere Lagen, insbesondere mit unterschiedlicher Faserorientierung, übereinanderliegen können. Bei dem Faserhalbzeug kann es sich ursprünglich um ein trockenes Fasermaterial oder um ein mit Matrixmaterial vorimprägniertes Fasermaterial (Prepreg) handeln. Die im Einleger enthaltenen orientierten Fasern und/oder Langfasern bewirken zumindest eine lokale Verstärkung und/oder Versteifung des Verbindungsknotens. Bevorzugt ist die Faserorientierung im Hinblick auf konkrete Lastpfade bzw. Kräfteverläufe im Verbindungsknoten eingestellt.

Das erfindungsgemäße Verfahren zur Herstellung einer erfindungsgemäßen Knotenstruktur weist zumindest die folgenden Schritte auf, die auch automatisiert ausgeführt werden können:
- Bereitstellen der vorgefertigten Profilbauteile;
- Positionieren des Einlegers und der knotenseitigen Profilenden der Profilbauteile in einem den Verbindungsknoten erzeugenden Presswerkzeug; und
- Ausführen eines Pressvorgangs unter Zugabe einer Kurzfasern enthaltenden Kunststoffmasse zur Erzeugung des die Profilenden verbindenden Verbindungsknotens.

Die Gestalt des zu erzeugenden Verbindungsknotens wird durch die Werkzeugkavität des mehrteiligen Presswerkzeugs vorgegeben. Die Kurzfasern (s. o.) enthaltende Kunststoffmasse wird erfindungsgemäss vor dem Schließen des Presswerkzeugs in die Werkzeugkavität eingebracht. Bspw. handelt es sich um ein SMC- oder BMC-Faser-Matrix-Halbzeug. Dies kann bspw. mithilfe der in der DE 10 2005 061 474 B4 beschriebenen Sprühvorrichtung erfolgen. Beim Pressvorgang verteilt sich die Kunststoffmasse dann in der Werkzeugkavität und umformt formschlüssig die knotenseitigen Profilenden. Gegebenenfalls kommt es auch zu einem Stoffschluss. Die Kurzfasern enthaltende Kunststoffmasse kann auch nach dem Schließen des Presswerkzeugs durch Injektion in die Werkzeugkavität eingebracht werden. Dieser Vorgang ist vergleichbar mit dem Spritzgießen bzw. der RTM-Technologie.

Das Bereitstellen dieser Bauteile umfasst z. B. das Konfektionieren, das Herrichten, das Reinigen und/oder das Prüfen der zu verbindenden Profilbauteile. Das Bereitstellen umfasst gegebenenfalls auch das Erzeugen von Stoßflächen (s. u.).

Bevorzugt wird der verwendete Einleger vorgefertigt und am Stück in die Werkzeugkavität eingelegt. Der verwendete Einleger kann schalenartig ausgebildet sein, wobei es sich insbesondere um ein vorgeformtes vorimprägniertes Fasermaterial (Preform aus Prepreg) handelt.

Die knotenseitigen Profilenden der miteinander zu verbindenden Profilbauteile können mit korrespondierenden Stoßflächen ausgebildet sein. Unter korrespondierenden Stoßflächen werden insbesondere im Verbindungsknoten einander zugewandte bzw. sich gegenüberstehende Flächenabschnitte verstanden, die im Belastungsfall bspw. auch als Kraftübertragungsflächen dienen. Die korrespondierenden Stoßflächen können bspw. als gerade Schrägflächen, als konkave und konvexe Flächen (oder zumindest mit konkaven oder konvexen Flächenanteilen), als gewellte Flächen, als gestufte Flächen und/oder als verschachtelbare Flächen ausgebildet sein. Die knotenseitigen Profilenden werden insbesondere derart vorbereitet und im Presswerkzeug positioniert, dass zwischen diesen Stoßflächen (wenigstens) ein im Wesentlichen homogener (d. h. konstant breiter) Beabstandungsspalt besteht. Das Presswerkzeug ist entsprechend ausgebildet. Während des Pressvorgangs kann die Kurzfasern enthaltende Kunststoffmasse dann auch in den Beabstandungsspalt eindringen und diesen auffüllen. Dadurch wird ein verbesserter Formschluss erreicht. Ein solcher Beabstandungsspalt weist ein bevorzugtes Spaltmaß von wenigstens 0,5 mm und höchstens 2 mm auf.

Bei wenigstens einem der miteinander zu verbindenden Profilbauteile kann es sich um ein Hohlprofilbauteil handeln. Unter einem Hohlprofilbauteil wird ein rohrartiges Profilbauteil (s. o.) mit geschlossenem Querschnitt (Hohlprofil) und mit wenigstens einer Profilkammer verstanden. Spätestens vor dem Pressvorgang kann das offene Profilende an einem solchen Hohlprofilbauteil durch ein Verschlusselement verschlossen werden. Bei dem Verschlusselement handelt es sich bspw. um einen am offenen Profilende zu befestigenden Deckel oder um einen aus Kunststoffschaummaterial gebildeten Pfropf bzw. Stopfen, der in das offene Profilende eingeklebt wird. Während des Pressvorgangs verhindert das Verschlusselement ein Eindringen der Kurzfasern enthaltenden Kunststoffmasse in das Hohlprofilbauteil bzw. in dessen Profilkammer. An einem Hohlprofilbauteil wird die Stoßfläche am knotenseitigen Profilende bevorzugt erst nach dem Verschließen mit einem Verschlusselement erzeugt.

Wenigstens eines der miteinander zu verbindenden Profilbauteile, insbesondere wenigstens das Hohlprofilbauteil, kann aus einem Faserkunststoffverbundmaterial gebildet sein (womit im Weiteren ein konsolidierter und ausgehärteter Faserkunststoffverbundwerkstoff gemeint ist). Bevorzugt sind alle Profilbauteile aus Faserkunststoffverbundmaterial, insbesondere auch aus unterschiedlichen Faserkunststoffverbundmaterialien, gebildet. Bei den Fasern kann es sich um Kohlenstofffasern, Glasfasern und/oder sonstige Fasern handeln. Bevorzugt handelt es sich um Langfasern, die, bspw. auch in einem Lageaufbau, lastpfadgerecht angeordnet sind. Bei dem Kunststoffmaterial (Matrix) kann es sich um einen duroplastischen oder auch thermoplastischen Kunststoff handeln. Die aus Faserkunststoffverbundmaterial gebildeten Hohlprofilbauteile können eine Wandstärke von 0,6 mm bis 10 mm, bevorzugt von 2 mm bis 8 mm und insbesondere von 3 mm bis 7 mm aufweisen. Zwischen der den Verbindungsknoten erzeugenden Kunststoffmasse und dem Profilende eines aus Faserkunststoffverbundmaterial gebildeten Profilbauteils kann es zusätzlich zum Formschluss auch zu einer stoffschlüssigen Verbindung kommen. Durch geeignete Materialabstimmung kann ein Stoffschluss begünstigt werden.

Die zu verbindenden Profilbauteile und/oder Hohlprofilbauteile können, zumindest an ihren zu verbindenden Profilenden bzw. an ihren knotenseitigen Endabschnitten, mit unterschiedlichen Querschnitten bzw. Querschnittsabmessungen und/oder mit unterschiedlichen Wandstärken bzw. Wanddicken ausgebildet sein.

Die Erfindung wird nachfolgend beispielhaft und in nicht einschränkender Weise anhand der schematischen Figuren näher erläutert. Die in den Figuren gezeigten und/oder nachfolgend erläuterten Merkmale können, auch unabhängig von bestimmten Merkmalskombinationen, die Erfindung weiterbilden.
- Fig. 1: zeigt in einer perspektivischen Darstellung einen aus Hohlprofilbauteilen gebildeten Rahmenabschnitt einer Kraftfahrzeugkarosserie.
- Fig. 2: zeigt in einer perspektivischen Darstellung eine zum Rahmenabschnitt der Fig. 1 gehörende Knotenstruktur.
- Fig. 3: zeigt in einer Schnittdarstellung den zur Knotenstruktur aus Fig. 2 gehörenden Verbindungsknoten.
- Fig. 4: veranschaulicht in mehreren Schnittdarstellungen die Erzeugung eines Verbindungsknotens bei der Herstellung einer Knotenstruktur.

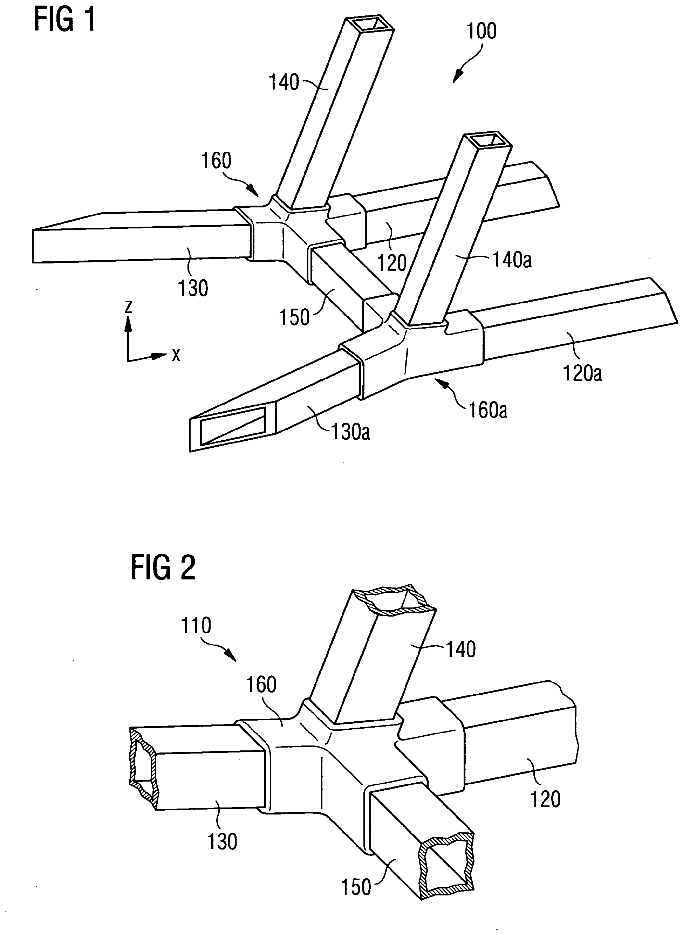

Bei dem in Fig. 1 gezeigten Rahmenabschnitt handelt es sich um eine Hinterwagenstruktur 100, die Teil eines Rahmens einer Fahrzeugkarosserie ist. Die Hinterwagenstruktur 100 umfasst mehrere aus Faserkunststoffverbundmaterial gebildete und getrennt voneinander vorgefertigte Hohlprofilbauteile 120, 120a, 130, 130a, 140, 140a und 150, die über Verbindungsknoten 160 und 160a fest miteinander verbunden sind. Die Hohlprofilbauteile 120, 120a, 130, 130a, 140, 140a und 150 sind bspw. mittels Pultrusion (Faserkunststoffverbund-Pultrusionsprofile), Flechten oder Wickeln hergestellt. Die Hohlprofilbauteile 120, 120a, 130, 130a, 140, 140a und 150 können belastungsabhängig unterschiedlich ausgebildet sein und daher verschiedene Querschnitte und/oder Wanddicken aufweisen und/oder auch aus verschiedenen Faserkunststoffverbundmaterialien gebildet sein. Ferner können die Hohlprofilbauteile 120, 120a, 130, 130a, 140, 140a und 150 über ihren Längserstreckungen mit veränderlichen Querschnitten ausgebildet sein.

Die Hinterwagenstruktur 100 kann ferner offene Profilbauteile (bspw. U-Profile) und/oder Vollprofilbauteile aufweisen, sowie Profilbauteile, die aus anderen Materialien (bspw. auch Metall) gebildet sind, wobei auch solche Profilbauteile über die Verbindungsknoten 160 bzw. 160a in die Rahmenstruktur 100 eingebunden sein können. Die Hinterwagenstruktur 100 verfügt trotzt ihres geringen Gewichts über eine hervorragende Festigkeit, Steifigkeit und Crashstabilität.

Die in einem Verbindungsknoten 160 bzw. 160a verbundenen Hohlprofilbauteile bilden zusammen mit diesem Verbindungsknoten eine Knotenstruktur im Sinne der Erfindung. Fig. 2 zeigt eine solche Knotenstruktur 110 für den in Fahrtrichtung x links liegenden Rahmenbereich. Die integrale Knotenstruktur 110 umfasst mehrere Hohlprofilbauteile 120, 130, 140 und 150, die an einem ihrer Profilenden in einem Verbindungsknoten 160 fest miteinander verbunden sind. Lediglich beispielhaft handelt es sich bei allen Hohlprofilbauteilen um Rechteckprofile.

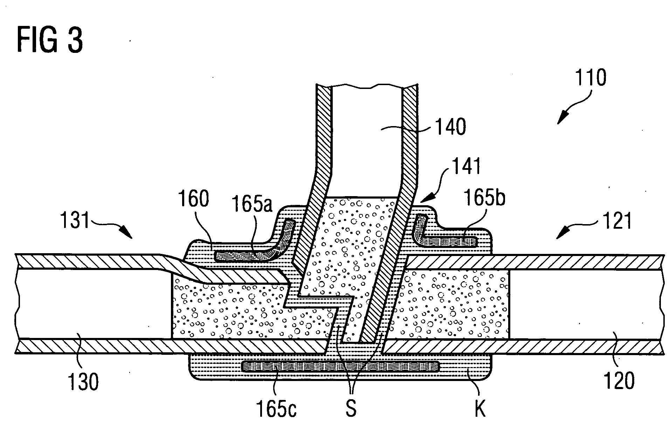

Fig. 3 zeigt einen Schnitt durch den Verbindungsknoten 160. Der Verbindungsknoten 160 ist aus einem Kurzfasern enthaltenden Kunststoffmaterial K gebildet und weist zudem mehrere an vorgegebenen Positionen im Kunststoffmaterial K eingebettete Einleger 165a, 165b und 165c auf, die aus orientierten Langfasern gebildet sind und die einer lokalen Verstärkung und/oder Versteifung des Verbindungsknotens 160 dienen.

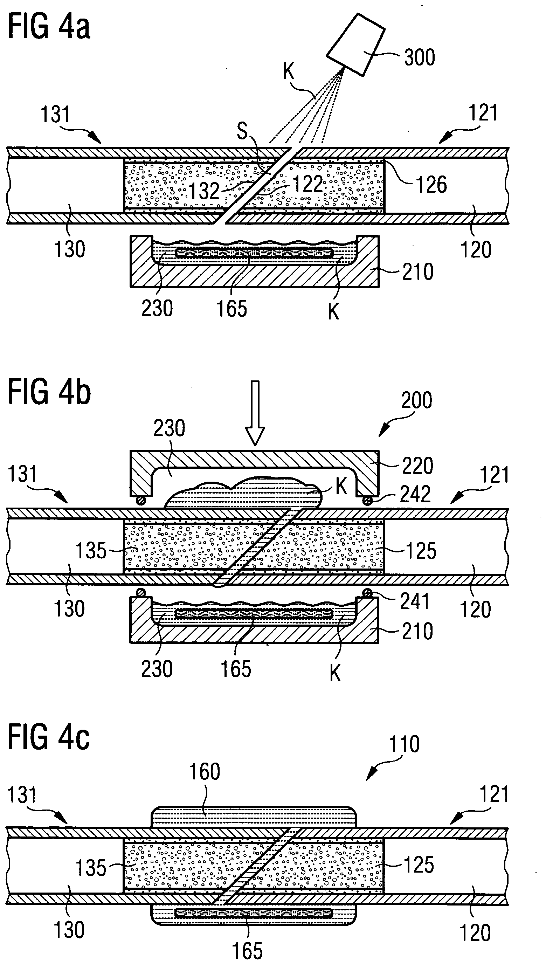

Anhand Fig. 4 wird nachfolgend die Herstellung der Knotenstruktur 110 und die Erzeugung des Verbindungsknotens 160 erläutert. In nicht einschränkender Weise wird dabei zum Zwecke einer vereinfachenden Darstellung und Beschreibung nur auf die Verbindung der beiden Hohlprofilbauteile 120 und 130 eingegangen.

Fig. 4 zeigt die knotenseitigen Profilenden 121 und 131 der beiden zu verbindenden Hohlprofilbauteile 120 und 130. Die Hohlprofilbauteile 120 und 130 können, anders als dargestellt, zumindest an ihren zu verbindenden Profilenden bzw. an ihren knotenseitigen Endabschnitten 121 und 131 mit unterschiedlichen Querschnitten bzw. Querschnittsabmessungen und/oder mit unterschiedlichen Wandstärken bzw. Wanddicken ausgebildet sein.

Die knotenseitigen Profilenden 121 und 131 der zu verbindenden Hohlprofilbauteile 120 und 130 sind mittels pfropf- bzw. stopfenartiger Verschlusselemente 125 und 135 verschlossen. Die Verschlusselemente 125 und 135 sind aus einem Kunststoffschaummaterial, insbesondere einem temperatur- und druckbeständigem Hartschaum, gebildet und mittels Klebstoff 126 eingeklebt.

Ferner sind die knotenseitigen Profilenden 121 und 131 mit korrespondierenden Stoßflächen 122 und 132 ausgebildet. Bei der in Fig. 4 gezeigten Ausführungsmöglichkeit sind diese Stoßflächen 122 und 132 als gerade Schrägflächen gestaltet. (Fig. 3 zeigt eine Ausführungsmöglichkeit mit komplex geformten Stoßflächen für die im Verbindungsknoten 160 zu verbindenden Profilenden 121, 131 und 141.)

Die Stoßflächen 122 und 132 werden nach dem Einkleben der Verschlusselemente 125 und 135 durch mechanische Bearbeitung, bspw. Schneiden und/oder Fräsen, der Profilenden 121 und 131 erzeugt, so dass die betreffenden Profilenden möglichst große Stoßflächen aufweisen und unter Einhaltung homogener (d. h. im Wesentlichen konstant breiter) Beabstandungsspalte S möglichst nahe beieinander liegend positioniert werden können (siehe auch Fig. 3). Auf diese Weise können auch mehr als zwei Profilenden, mitunter sogar bis zu fünf Profilenden und mehr, unter konstruktiver Berücksichtigung späterer Belastungslastpfade in einem Verbindungsknoten 160 zusammengeführt und verbunden werden.

Zur Erzeugung des Verbindungsknotens 160 werden die verschlossenen und mit korrespondierenden Stoßflächen 122 und 132 ausgebildeten Profilenden 121 und 131 der Hohlprofilbauteile 120 und 130 in ein den Verbindungsknoten 160 erzeugendes Presswerkzeug 200 eingelegt, wie in Fig. 4a gezeigt. Das Presswerkzeug 200 ist so ausgebildet, dass eine lagegenaue Fixierung der Profilenden 121 und 131 ermöglicht wird, wobei zwischen den Stoßflächen 122 und 132 ein homogener Beabstandungsspalt S besteht. Die Spaltbreite beträgt bspw. 0,5 mm bis 2,0 mm.

In der Werkzeugkavität 230 des Werkzeugunterteils 210 befindet sich bereits eine vor dem Positionieren der Profilenden 121 und 131 eingebrachte kurzfaserhaltige Kunststoffmasse K, insbesondere mit duroplastischer Matrix (Harz), und wenigstens ein orientierte Langfasern enthaltender Einleger (Verstärkungspatch) 165. Bei dem Einleger 165 handelt es sich beispielhaft um ein ebenes flächiges Element. Ebenso kann der Einleger 165 bspw. auch schalenartig (d. h. mit einer flächigen 3D-Form) oder bspw. auch stabförmig ausgebildet sein. Das Presswerkzeug 200 ist so ausgebildet, dass eine lagegenaue Anordnung des Einlegers 165 ermöglicht wird.

Nach dem Positionieren der zu verbindenden Profilenden 121 und 131 wird auf den Verbindungsbereich weitere kurzfaserhaltige Kunststoffmasse K aufgebracht, bspw. durch Aufspritzen mithilfe der gezeigten Sprühvorrichtung 300. Ferner kann wenigstens ein weiterer Einleger in der Kavität 230 positioniert werden.

Anschließend wird das Presswerkzeug 200 durch Absenken des Werkzeugoberteils 220 geschlossen, wie in Fig. 4b gezeigt, und ein Pressvorgang ausgeführt. Bei diesem Pressvorgang verteilt sich die definierte Menge der Kurzfasern enthaltenden Kunststoffmasse K in der Kavität 230. Hierbei wird einerseits der Einleger 165 in die Kunststoffmasse K eingebettet und andererseits werden die in der Kavität 230 angeordneten Profilenden 121 und 131 der Hohlprofilbauteile 120 und 130 formschlüssig umformt, wobei die kurzfaserhaltige Kunststoffmasse K auch in den Beabstandungsspalt S hinein gedrückt wird. Die Verschlusselemente 125 und 135 wirken als Barrieren und verhindern das Eindringen der faserhaltigen Kunststoffmasse K in die Profilkammern der Hohlprofilbauteile 120 und 130, wodurch sich u. a. in der Kavität 230 ein ausreichend hoher Formungsdruck aufbauen kann. Die Form des Verbindungsknotens 160 ergibt sich durch die Negativform der Werkzeugkavität 230. Zwischen der Kunststoffmasse K und den umschlossenen Profilenden 121 und 131 kann es auch zu einer stoffschlüssigen Verbindung kommen.

Bei der Erzeugung des Verbindungsknotens 160 werden nur die zu verbindenden Profilenden 121 und 131 in das Presswerkzeug 200 eingelegt, so dass die Hohlprofilbauteile 120 und 130 durch Öffnungen im Presswerkzeug 200 in die Werkzeugkavität 230 hineinragen. Während des Pressvorgangs wird die Abdichtung des Presswerkzeugs 200 mithilfe von Dichtungen 241 und 242 bewerkstelligt. Die druckfesten Verschlusselemente 125 und 135 können wenigstens bis zu dem durch die Werkzeugdichtungen 241 und 242 gebildeten Werkzeugdichtungsbereich heranreichen und dadurch eine Stabilisierung der Hohlprofilwandungen bewirken und die Kavitätsabdichtung verbessern.

Nachdem die Kunststoffmasse K infolge von Druck- und Temperatureinwirkung ausgehärtet ist, kann das Presswerkzeug 200 geöffnet und die hergestellte Knotenstruktur 110 entnommen werden, wie in Fig. 4c gezeigt. Der Verbindungsknoten 160 weist Verstärkungsfasern mit unterschiedlichen Faserlängen auf, nämlich unorientierte Kurzfasern, die über die faserhaltige Kunststoffmasse K eingebracht sind, und lastgerecht orientierte Langfasern, die über den Einleger 165 eingebracht sind. Bei den Kurz- und Langfasern kann es sich auch um unterschiedliche Faserarten handeln. Der Verbindungsknoten 160 hat somit inhomogene und insbesondere anisotrope Eigenschaften. Die Wandstärke des Verbindungsknotens 160 kann im Bereich von 1 mm bis 15 mm liegen, wobei sowohl gleiche als auch unterschiedliche Wandstärken vorgesehen sein können. Die Verschlusselemente 125 und 135 verbessern ohne nennenswertes Mehrgewicht die Festigkeit, Steifigkeit und Crashstabilität der Knotenstruktur 110.

## Patentansprüche

1. Verfahren zur Herstellung einer Knotenstruktur (110) für eine Fahrzeugkarosserie, mit wenigstens zwei Profilbauteilen (120, 130) und einem aus faserverstärktem Kunststoff gebildeten Verbindungsknoten (160), der die Profilbauteile (120, 130) an knotenseitigen Profilenden (121, 131) verbindet, wobei der Verbindungsknoten (160) aus einem mit unorientierten Kurzfasern verstärkten Kunststoff (K) gebildet ist und in wenigstens einem Bereich zusätzlich mit einem Einleger (165) verstärkt ist, mit den Schritten:
- Bereitstellen der vorgefertigten Profilbauteile (120, 130);
- Positionieren des Einlegers (165) und der knotenseitigen Profilenden (121, 131) in einem den Verbindungsknoten (160) erzeugenden Presswerkzeug (200); und
- Ausführen eines Pressvorgangs unter Zugabe einer Kurzfasern enthaltenden Kunststoffmasse (K) zur Erzeugung des die Profilenden (121, 131) verbindenden Verbindungsknotens (160), wobei die Kurzfasern enthaltende Kunststoffmasse (K) vor dem Schließen des Presswerkzeugs (200) in dessen Werkzeugkavität (230) eingebracht wird und sich während des Pressvorgangs in der Werkzeugkavität (230) verteilt.

2. Verfahren nach Anspruch 1,
**dadurch gekennzeichnet, dass**
der verwendete Einleger (165) schalenartig ausgebildet ist.

3. Verfahren nach Anspruch 1 oder 2,
**dadurch gekennzeichnet, dass**
die knotenseitigen Profilenden (121, 131) mit korrespondierenden Stoßflächen (122, 132) ausgebildet sind und derart im Presswerkzeug (200) positioniert werden, dass zwischen den Stoßflächen (122, 132) ein homogener Beabstandungsspalt (S) besteht, der während des Pressvorgangs mit der Kurzfasern enthaltenden Kunststoffmasse (K) aufgefüllt wird.

4. Verfahren nach einem der vorausgehenden Ansprüche,
**dadurch gekennzeichnet, dass**
wenigstens eines der Profilbauteile (120, 130) ein Hohlprofilbauteil ist, dessen offenes Profilende (121, 131) durch ein Verschlusselement (125, 135) verschlossen wird, um während des Pressvorgangs ein Eindringen der Kurzfasern enthaltenden Kunststoffmasse (K) in das Hohlprofilbauteil (120, 130) zu verhindern.

5. Verfahren nach einem der vorausgehenden Ansprüche,
**dadurch gekennzeichnet, dass**
wenigstens eines der Profilbauteile (120, 130) aus einem Faserkunststoffverbundmaterial gebildet ist.

6. Verfahren nach einem der vorausgehenden Ansprüche,
**dadurch gekennzeichnet, dass**
wenigstens zwei der im Verbindungsknoten (160) miteinander zu verbindenden Profilbauteile (120, 130) unterschiedliche Querschnitte aufweisen.

7. Knotenstruktur (110) für eine Fahrzeugkarosserie, hergestellt mit einem Verfahren gemäß einem der vorausgehenden Ansprüche, mit wenigstens zwei Profilbauteilen (120, 130) und einem aus faserverstärktem Kunststoff gebildeten Verbindungsknoten (160), der die Profilbauteile (120, 130) an knotenseitigen Profilenden (121, 131) verbindet, wobei der Verbindungsknoten (160) aus einem mit unorientierten Kurzfasern verstärkten Kunststoff (K) gebildet ist und in wenigstens einem Bereich zusätzlich mit einem Einleger (165) verstärkt ist.

8. Knotenstruktur (110) nach Anspruch 7,
**dadurch gekennzeichnet, dass**
der Einleger (165) aus orientierten Fasern und/oder Langfasern gebildet ist.

9. Fahrzeugkarosserie, insbesondere für einen Personenkraftwagen, mit einem aus Profilbauteilen (120, 130, 140, 150) gebildeten Rahmen (100), der wenigstens eine Knotenstruktur (110) aufweist, die gemäß Anspruch 7 oder 8 ausgebildet und/oder mit einem Verfahren nach einem der Ansprüche 1 bis 6 hergestellt ist.

## Claims

1. Method for producing a node structure (110) for a vehicle body, with at least two profile components (120, 130) and a connecting node (160) made from fibre-reinforced plastic which connects the profile components (120, 130) to node-side profile ends (121, 131), wherein the connecting node (160) is made from a plastic (K) reinforced with unoriented short fibres and is additionally reinforced in at least one area by an insert (165), with the steps:
- providing the prefabricated profile components (120, 130);
- positioning the insert (165) and the node-side profile ends (121, 131) in a pressing tool (200) producing the connecting node (160); and
- performing a pressing process with the addition of a plastic mass (K) containing short fibres for producing the connecting node (160) connecting the profile ends (121, 131), wherein the plastic mass (K) containing the short fibres is introduced before closing the pressing tool (200) in its tool cavity (230) and is distributed during the pressing process in the tool cavity (230).

2. Method according to claim 1,
**characterised in that**
the insert (165) used is designed to be shell-like.

3. Method according to claim 1 or 2,
**characterised in that**
the node-side profile ends (121, 131) are designed to have corresponding joint faces (122, 132) and are positioned in the pressing tool (200) such that between the joint faces (122, 132) a homogenous spacing gap (S) is formed which is filled during the pressing process with the plastic mass (K) containing short fibres.

4. Method according to any of the preceding claims,
**characterised in that**
at least one of the profile components (120, 130) is a hollow profile component, the open profile end (121, 131) of which is closed by a closure element (125, 135) in order during the pressing process to prevent the penetration of the plastic mass (K) containing short fibres into the hollow component (120, 130).

5. Method according to any of the preceding claims,
**characterised in that**
at least one of the profile components (120, 130) is made from a fibre plastic composite material.

6. Method according to any of the preceding claims,
**characterised in that**
at least two of the profile components (120, 130) to be connected to one another in the connecting node (160) have different cross-sections.

7. Node structure (110) for a vehicle body, produced by a method according to any of the preceding claims, with at least two profile components (120, 130) and a connecting node (160) made from fibre-reinforced plastic which connects the profile components (120, 130) onto node side profile ends, (121, 131), wherein the connecting node (160) is made from a plastic (K) reinforced with unoriented short fibres and is additionally reinforced in a least one area with an insert (165).

8. Node structure (110) according to claim 7,
**characterised in that**
the insert (165) is made from oriented fibres and/or long fibres.

9. Vehicle body, in particular for a passenger car with a frame (100) made from profile components (120, 130, 140, 150) which has at least one node structure (110) which is designed according to claim 7 or 8 and/or is produced by a method according to any of claims 1 to 6.

## Revendications

1. Procédé de fabrication d'une structure de liaison (110) pour une carrosserie de véhicule, avec au moins deux composants profilés (120, 130) et une liaison de raccordement (160) formée à partir de matière plastique renforcée de fibres qui raccorde les composants profilés (120, 130) au niveau d'extrémités profilées côté liaison (121, 131), dans lequel la liaison de raccordement (160) est formée à partir d'une matière plastique (K) renforcée de fibres courtes non orientées et est renforcée dans au moins une zone en outre avec un élément d'insertion (165), avec les étapes :
- la mise à disposition des composants profilés (120, 130) préfabriqués ;
- le positionnement de l'élément d'insertion (165) et des extrémités profilées côté liaison (121, 131) dans un outil de pressage (200) générant la liaison de raccordement (160) ; et
- la réalisation d'un processus de pressage en ajoutant une masse de matière plastique (K) contenant des fibres courtes pour la génération de la liaison de raccordement (160) raccordant les extrémités profilés (121, 131), dans lequel la masse de matière plastique (K) contenant des fibres courtes est introduite avant la fermeture de l'outil de pressage (200) dans sa cavité d'outil (230) et se répartit pendant le processus de pressage dans la cavité d'outil (230).

2. Procédé selon la revendication 1,
**caractérisé en ce que**
l'élément d'insertion utilisé (165) est réalisé comme une coque.

3. Procédé selon la revendication 1 ou 2,
**caractérisé en ce que**
les extrémités profilées (121, 131) côté liaison sont réalisées avec des surfaces d'aboutement correspondantes (122, 132) et sont positionnées dans l'outil de pressage (200) de telle manière qu'entre les surfaces d'aboutement (122, 132) existe une fente d'espacement homogène (S) qui est remplie pendant le processus de pressage avec la masse de matière plastique (K) contenant des fibres courtes.

4. Procédé selon l'une quelconque des revendications précédentes,
**caractérisé en ce que**
au moins un des composants profilés (120, 130) est un composant profilé creux, dont l'extrémité profilée ouverte (121, 131) est fermée par un élément de fermeture (125, 135) afin d'empêcher pendant le processus de pressage une pénétration de la masse de matière plastique (K) contenant des fibres courtes dans le composant profilé creux (120, 130).

5. Procédé selon l'une quelconque des revendications précédentes,
**caractérisé en ce que**
au moins un des composants profilés (120, 130) est formé à partir d'un matériau composite de matière plastique renforcée de fibres.

6. Procédé selon l'une quelconque des revendications précédentes,
**caractérisé en ce que**
au moins deux des composants profilés (120, 130) à raccorder entre eux dans la liaison de raccordement (160) présentent différentes sections transversales.

7. Structure de liaison (110) pour une carrosserie de véhicule, fabriquée avec un procédé selon l'une quelconque des revendications précédentes, avec au moins deux composants profilés (120, 130) et une liaison de raccordement (160) formée à partir de matière plastique renforcée de fibres qui raccorde les composants profilés (120, 130) au niveau des extrémités profilées côté liaison (121, 131), dans laquelle la liaison de raccordement (160) est formée à partir d'une matière plastique (K) renforcée avec des fibres courtes non orientées et est renforcée dans au moins une zone en outre avec un élément d'insertion (165).

8. Structure de liaison (110) selon la revendication 7
**caractérisée en ce que**
l'élément d'insertion (165) est formé à partir de fibres et/ou fibres longitudinales orientées.

9. Carrosserie de véhicule, en particulier pour un véhicule personnel, avec un châssis (100) formé de composants profilés (120, 130, 140, 150) qui présente au moins une structure de liaison (110) qui est réalisée selon la revendication 7 ou 8 et/ou est fabriqué avec un procédé selon l'une quelconque des revendications 1 à 6.
